**Europäisches Patentamt**

**European Patent Office**

**Office européen des brevets**

(11) Veröffentlichungsnummer: **0 285 908 B1**

# EUROPÄISCHE PATENTSCHRIFT

(45) Veröffentlichungstag der Patentschrift: **08.01.92**

(21) Anmeldenummer: **88104614.8**

(22) Anmeldetag: **23.03.88**

(51) Int. Cl.5: **C02F 9/00**, C02F 1/28, B01D 35/00, C02F 1/50

(54) **Gerät zur Verbesserung der Qualität von Trinkwasser.**

(30) Priorität: **10.04.87 DE 3712284**

(43) Veröffentlichungstag der Anmeldung:
**12.10.88 Patentblatt 88/41**

(45) Bekanntmachung des Hinweises auf die
Patenterteilung:
**08.01.92 Patentblatt 92/02**

(84) Benannte Vertragsstaaten:
**AT CH GB LI NL**

(56) Entgegenhaltungen:
**DE-U- 8 702 676**
**US-A- 3 561 506**
**US-A- 4 378 293**

(73) Patentinhaber: **LEIFHEIT Aktiengesellschaft
Leifheitstrasse
W-5408 Nassau/Lahn(DE)**

(72) Erfinder: **Liebscher, Johannes
Dr. Haupt-Weg
W-5408 Nassau/Lahn(DE)**
Erfinder: **Schülein, Rolf Günter
Gartenstrasse 13
W-5409 Singhofen(DE)**

**EP 0 285 908 B1**

## Beschreibung

Die Erfindung bezieht sich auf ein Gerät zur Verbesserung der Qualität von Trinkwasser gemäß dem Oberbegriff des Anspruchs 1.

Nach der DE-A-34 09 828 ist ein derartiges Gerät bekannt, bei dem ein Vorbehälter mit einer Aufnahmekammer für eine Filterpatrone gezeigt ist; dieser Vorbehälter wird auf eine Kanne aufgesetzt. Die US-A-3 561 506 zeigt ebenfalls ein Gerät zur Verbesserung von Trinkwasser, das als Standgerät ausgebildet ist. Der Vorbehälter ist bei dieser Ausführungsform über einer Kannenaufnahme angeordnet. In beiden Geräten wird in eine Aufnahmekammer des Vorbehälters eine Filterpatrone, die mit einem Reinigungsmittel gefüllt ist, eingesetzt. Bei beiden Ausführungen bestehen die Filterpatronen aus mehreren Einzelteilen und erfordern Montagearbeiten. Da die Filterpatronen unbedingt keimfrei zum Einsatz kommen müssen, um gesundheitliche Gefährdung zu verhindern, müssen besonders hohe Anforderungen bei der Montage bezüglich der Keimfreiheit und Hygiene gestellt werden.

Es ist deshalb Aufgabe der Erfindung, ein Gerät mit einer entsprechenden Filterpatrone zu schaffen, dessen Montage durch ein Minimum an Einzelteilen praktisch ohne Handarbeit erfolgen kann, um eine Verkeimung bei der Montage zu verhindern. Des weiteren muß das Einsetzen der Filterpatrone so vereinfacht werden, daß dies möglichst mit minimalem Handkontakt erfolgen kann.

Diese Aufgabe wird durch die Merkmale des Anspruchs 1 gelöst. Dadurch besteht die Filterpatrone nur noch aus zwei Teilen, wobei der Verschluß als Folie heiß aufgesiegelt werden kann und dadurch zusätzlich einer Verkeimung entgegengewirkt wird. Das Einsetzen der Filterpatrone ist denkbar einfach. Die Öffnung der Filterpatrone erfolgt durch die Durchstoßeinrichtung beim Einsetzen ohne zusätzliches Anfassen derselben.

Insbesondere dann, wenn das Reinigungsmittel bakteriostatisch wirkende Stoffe, wie zum Beispiel Silber in dissoziierbarer Form enthält, ist es wichtig, daß die Filterpatrone immer eine gewisse Restfeuchte hat. Dies wird durch die besondere Ausbildung der Aufnahmekammer erreicht.

Einige Ausführungsbeispiele der Erfindung werden im folgenden an Hand der Zeichnungen näher erläutert.

Es zeigen:

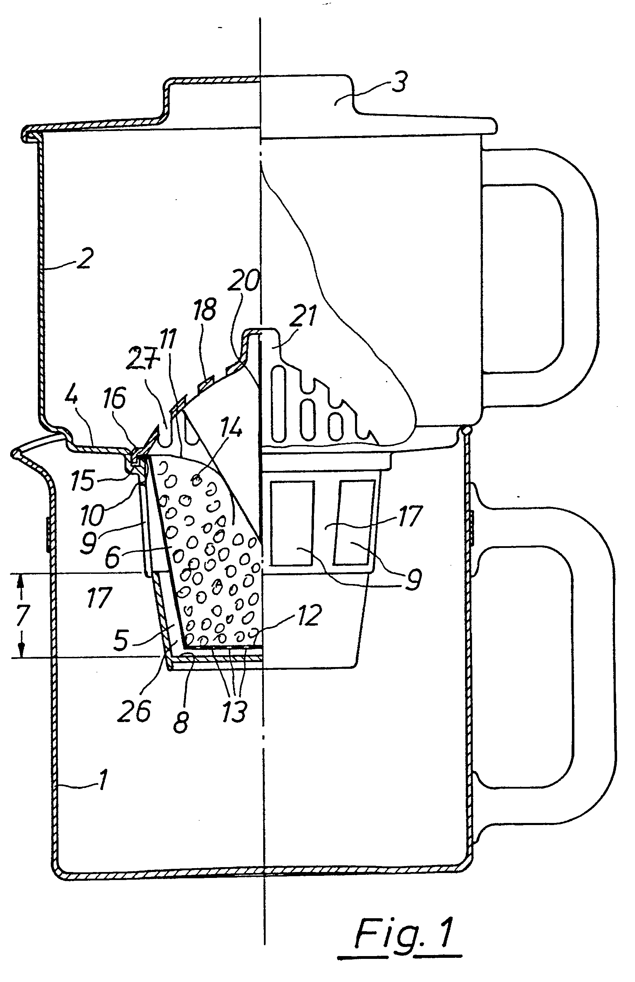

Figur 1    eine Darstellung des Gerätes mit Kanne, wobei der Bereich Aufnahmekammer - Filterpatrone zur Hälfte im Schnitt und zur anderen Hälfte in der Ansicht dargestellt ist,

Figur 2    eine Alternativlösung und

Figur 3    eine weitere Alternativlösung in gleicher Darstellungsform.

Auf eine Kanne 1 ist ein Vorbehälter 2 mit Deckel 3 aufgesetzt. Dieser Vorbehälter 2 hat am Einlaufboden 4 eine Aufnahmekammer 5 für eine Filterpatrone 6. Die Aufnahmekammer 5 ist mit einem Abstand 7 vom Kammerboden 8 mit Fenstern 9 versehen.

Die Filterpatrone ist becherförmig mit einem Rand 10 für ein Folienverschlußteil 11 ausgeführt. Der Patronenboden 12 ist mit Öffnungen 13, die kleiner wie der größte Reinigungsmittelpartikel 14 sind, versehen.

Der Einlaufboden 4 ist mit einer Ringnut 15 zur Einrastung eines Dichtringes 16 versehen. Die Ringnut 15 geht in Stege 17, die die Fenster 9 bilden, über. Der Dichtring 16 ist an einem Einlaufteil 18 angeformt. Das Einlaufteil 18 ist mit Wassereinlaufschlitzen 27 versehen.

Zum Durchstoßen des Folienverschlußteiles 11 ist auf der Innenseite des Einlaufteiles 18 eine Durchstoßeinrichtung 20 angebracht. Diese besteht aus einer Kreuzstegspitze.

Zum leichteren Einsetzen des Einlaufteiles 18 ist dieses mit einem Griff 21 versehen.

Natürlich ist es auch möglich, daß das Einlaufteil 18 mit dem Einlaufboden 4 einstückig hergestellt ist und die Aufnahmekammer 5 an den Einlaufboden 4 über ein geeignetes Verbindungsmittel angebracht wird.

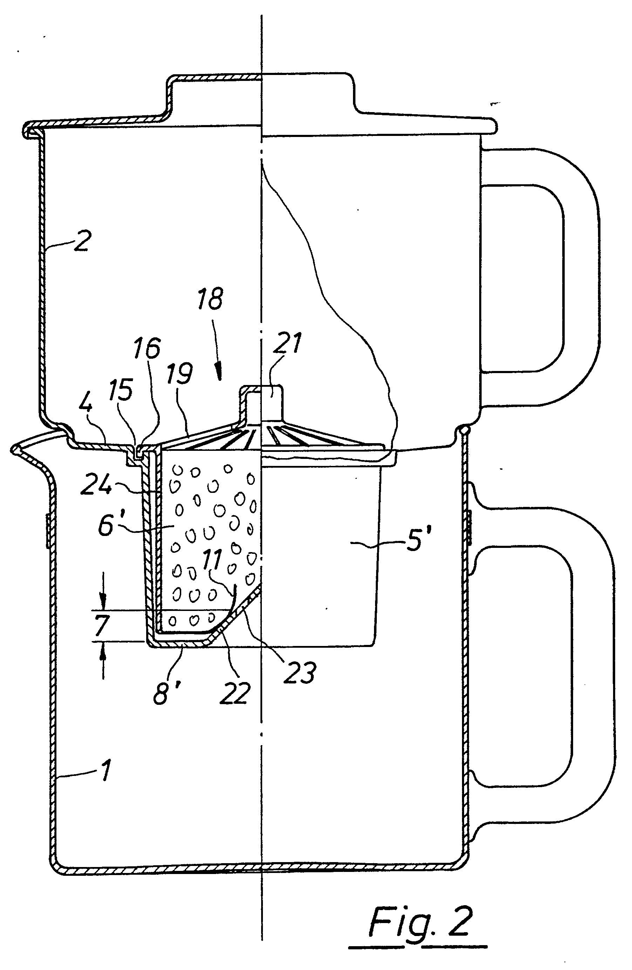

Gemäß der Ausführung nach Figur 2 ist im Einlaufboden 18 wiederum die Ringnut 15 vorgesehen, an die eine Aufnahmekammer 5′ angebracht ist. Bei dieser Aufnahmekammer 5′ ist der Kammerboden zu einem das Durchstoßteil bildenden Hohlkegel 22 ausgebildet. Dieser Hohlkegel 22 ist mit Wasserauslaufschlitze 23 versehen. Diese Wasserauslaufschlitze sind wiederum mit einem Abstand 7 zum Kammerboden 8′ angeordnet.

Die Filterpatrone 6′ ist wiederum einseitig mit einem aufgesiegelten Folienverschlußteil 11 versehen. Die andere Seite ist als Einlaufteil 18 mit Dichtring 16 ausgebildet. Das Einlaufteil 18 ist einstückig mit dem Patronenmantel 24 ausgeführt.

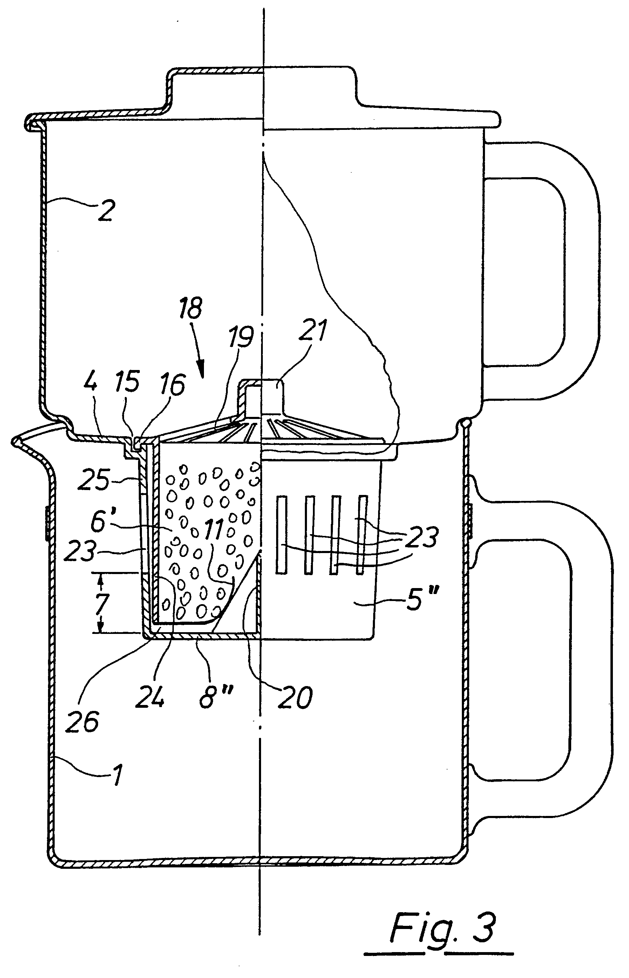

Bei dem Ausführungsbeispiel gemäß Figur 3 ist die Aufnahmekammer 5″ ebenfalls direkt an die Ringnut 15 des Einlaufbodens 4 angeformt. Die Patrone 6′ ist identisch gemäß der Ausführung nach Figur 2. Am Kammerboden 8″ befindet sich eine als Kreuzstegspitze ausgefernte Durchstoßeinrichtung 20. Die Wasserauslaufschlitze 23 sind bei diesem Ausführungsbeispiel in einem Abstand 7 vom Boden 8″ in dem Kammermantel 25 angeordnet.

Die Wasserauslaufschlitze 23 sowie die Wasserdurchlaßöffnungen 13 sind im Durchmesser beziehungsweise in ihrer Schlitzbreite kleiner als die Reinigungsmittelpartikel 14. Dagegen können die Wassereinlaufschlitze 19,27 geringfügig größer als die kleinsten Reinigungsmittelpartikel sein. Dadurch wird erreicht, daß geringe Mengen zum Beispiel gesilberter Kohle in den Vorbehälter gelangen und dadurch verhindern, daß im verbleibenden Restwasser eine Verkeimung eintritt.

**Patentansprüche**

1. Gerät zur Verbesserung der Qualität von Trinkwasser für Reise und/oder Haushalt, umfassend einen zur Aufnahme des zu verbessernden Trikwassers dienenden Vorbehälter mit einer mit zumindest einer Öffnung versehenen Aufnahmekammer für eine mit einem Reinigungsmittel gefüllten Filterpatrone, dadurch gekennzeichnet, daß die Filterpatrone (6, 6') becherartig auf der einen Seite mit Wasserdurchlaßöffnungen (13, 19) beziehungsweise eine Vorprägung für eine zu schaffende Wasserdurchlaßöffnung und auf der anderen Seite mit einem Folienverschlußteil (11) ausgebildet ist, und daß am Boden (8, 8') der Aufnahmekammer (5, 5', 5'') und/oder in einem die Aufnahmekammer abdeckenden Einlaufteil (18) eine Durchstoßeinrichtung (20) vorgesehen ist.

2. Gerät nach Anspruch 1, dadurch gekennzeichnet, daß das Durchstoßteil vom Kammerboden (8) als Hohlkegel (22) ausgeformt mit Wasserauslaufschlitzen (23) ausgebildet ist.

3. Gerät nach Anspruch 2, dadurch gekennzeichnet, daß die Wasserauslaufschlitze (23) mit Abstand (7) zum Boden vorgesehen sind.

4. Gerät nach Anspruch 1, dadurch gekennzeichnet, daß das Durchstoßteil am Boden der Aufnahmekammer als Mehrfachstegspitze (20) angeformt ist, und daß Wasserauslaufschlitze (23) mit Abstand (7) über dem geschlossenen Kammerboden (8'') am Kammermantel (25) angeordnet und ein Sammelraum (26) von dem darunter liegenden Kammerteil gebildet ist.

5. Gerät nach Anspruch 1, dadurch gekennzeichnet, daß die Filterpatrone (6) mit dem Rand (10) des Folienverschlußteiles (11) dichtend zwischen einem Einlaufboden (4) des Vorbehälters (2) und dem Einlaufteil (18) angeordnet ist.

6. Gerät nach Anspruch 5, dadurch gekennzeichnet, daß im Einlaufboden (4) eine Ringnut (15) zur Einrastung eines an das Einlaufteil (18) oder den Rand (10) angeformten Dichtringes (16) vorgesehen ist.

7. Gerät nach einem der Ansprüche 1, 5 oder 6, dadurch gekennzeichnet, daß die Aufnahmekammer (5) aus einem topfartigen Sammelraum (26) und zumindest zwei zur Verbindung mit dem Vorbehälter dienenden Stegen (17) gebildet ist.

8. Gerät nach einem der Ansprüche 1 bis 7, dadurch gekennzeichnet, daß die Aufnahmekammer (5, 5', 5'') beziehungsweise das Einlaufteil (18) einstückig mit dem Vorbehälter (2) hergestellt ist.

**Claims**

1. Apparatus for improving the quality of drinking water when travelling and/or for the household, comprising a container serving for receiving the drinking water to be improved and having a receiving chamber provided with at least one opening for a filter cartridge filled with a purifying agent, characterised in that the filter cartridge (6, 6') is constructed in the manner of a beaker on the one side with water passage apertures (13, 19) or a pre-stamping for a water passage aperture to be provided and, on the other side, with a foil closure part (11), and in that a piercing device (20) is provided at the bottom (8, 8') of the receiving chamber (5, 5', 5") and/or in an inlet part (18) covering the receiving chamber.

2. Apparatus according to Claim 1, characterised in that the piercing part is constructed shaped out of the chamber bottom (8) as a hollow cone (22) with water outlet slots (23).

3. Apparatus according to Claim 2, characterised in that the water outlet slots (23) are provided at a distance (7) from the bottom.

4. Apparatus according to Claim 1, characterised in that the piercing part is moulded onto the bottom of the receiving chamber as a multipleweb tip (20), and in that water outlet slots (23) are arranged on the chamber shell (25) at a distance (7) above the closed chamber bottom (8") and a collection space (26) is formed by the chamber part situated beneath it.

5. Apparatus according to Claim 1, characterised in that the filter cartridge (6) is arranged in a sealing manner with the edge (10) of the foil closure part (11) between an inlet bottom (4) of the container (2) and the inlet part (18).

6. Apparatus according to Claim 5, characterised in that an annular groove (15) for engagement of a sealing ring (16) moulded onto the inlet part (18) or the edge (10) is provided in the inlet bottom (4).

7. Apparatus according to one of Claims 1, 5 or 6, characterised in that the receiving chamber (5) is formed from a pot-type collection space (26) and at least two webs (17) serving for the connection with the container.

8. Apparatus according to one of Claims 1 to 7, characterised in that the receiving chamber (5, 5', 5") or the inlet part (18) is produced integrally with the container (2).

**Revendications**

1. Dispositif pour améliorer la qualité de l'eau potable pour le voyage et/ou le ménage, comprenant un prérécipient servant à recueillir l'eau potable à améliorer et ayant une chambre réceptacle, pourvue d'au moins une ouverture, pour une cartouche filtrante remplie d'un agent de purification, caractérisé en ce que la cartouche filtrante (6, 6') est conçue, à la manière d'un gobelet, d'un côté avec des ouvertures pour le passage de l'eau (13, 19) ou un prédécoupage pour une ouverture à créer pour le passage de l'eau, et, de l'autre côté, avec une pièce de fermeture en feuille métallique (11), et en ce qu'un dispositif de perforation (20) est prévu au fond (8, 8') de la chambre réceptacle (5, 5', 5") et/ou dans une pièce d'entrée (18) recouvrant la chambre réceptacle.

2. Dispositif suivant la revendication 1, caractérisé en ce que la pièce de perforation, façonnée à partir du fond (8) de la chambre en un cône creux (22), est conçue avec des fentes pour l'écoulement de l'eau (23).

3. Dispositif suivant la revendication 2, caractérisé en ce que les fentes pour l'écoulement de l'eau (23) sont prévues à une distance (7) du fond.

4. Dispositif suivant la revendication 1, caractérisé en ce que la pièce de perforation est moulée sur le fond de la chambre réceptacle comme une pointe à âmes multiples (20), et en ce que les fentes pour l'écoulement de l'eau (23) sont disposées sur l'enveloppe (25) de la chambre à une distance (7) au-dessus du fond fermé (8") de la chambre et un espace réservoir (26) est formé par la partie de chambre située en-dessous.

5. Dispositif suivant la revendication 1, caractérisé en ce que la cartouche filtrante (6) est disposée de manière étanche avec le bord (10) de la pièce de fermeture en feuille métallique (11) entre un fond d'entrée (4) du prérécipient (2) et la pièce d'entrée (18).

6. Dispositif suivant la revendication 5, caractérisé en ce qu'une rainure annulaire (15) pour l'engagement d'un anneau d'étanchéité (16) moulé sur la pièce d'entrée (18) ou le bord (10) est prévue dans le fond d'entrée (4).

7. Dispositif suivant l'une des revendications 1, 5 ou 6, caractérisé en ce que la chambre réceptacle (5) est formée à partir d'un espace réservoir du type pot (26) et au moins deux âmes (17) servant au raccordement avec le prérécipient.

8. Dispositif suivant l'une des revendications 1 à 7, caractérisé en ce que la chambre réceptacle (5, 5', 5") ou la pièce d'entrée (18) est fabriquée d'une seule pièce avec le prérécipient (2).

*Fig.1*

*Fig. 2*

*Fig. 3*